# EUROPÄISCHE PATENTSCHRIFT

(11) **EP 2 724 136 B1**
(45) Veröffentlichungstag und Bekanntmachung des Hinweises auf die Patenterteilung: **20.05.2015**
(21) Anmeldenummer: 12726114.7
(22) Anmeldetag: 06.06.2012
(51) Int. Cl.: G01M 15/04, G01M 15/02

(54) **HYDRODYNAMISCHER DREHMOMENTERZEUGER FÜR PRÜFSTÄNDE, SOWIE REGELUNGSVERFAHREN DAFÜR**
HYDRODYNAMIC TORQUE GENERATOR FOR TEST BENCHES, AND CONTROL METHOD THEREFOR
GÉNÉRATEUR DE COUPLE DE ROTATION HYDRODYNAMIQUE POUR PLATEFORMES D'ESSAIS, ET PROCÉDÉ DE RÉGLAGE CORRESPONDANT

(30) Priorität: 24.06.2011 AT 9282011
(43) Veröffentlichungstag der Anmeldung: 30.04.2014
(73) Patentinhaber: AVL List GmbH, 8020 Graz (AT)
(72) Erfinder: PASSENBRUNNER, Thomas Ernst, A-4407 Dietach (AT); SASSANO, Mario, I-00199 Rome (IT); TROGMANN, Hannes, A-4221 Steyregg (AT); DEL RE, Luigi, A-4040 Linz (AT); KOKAL, Helmut, A-8020 Graz (AT); SCHMIDT, Martin, 63225 Langen (DE); PAULWEBER, Michael, A-8071 Hausmannstätten (AT)
(74) Vertreter: Patentanwälte Pinter & Weiss OG
(86) Internationale Anmeldenummer: PCT/EP2012/060709
(87) Internationale Veröffentlichungsnummer: WO 2012/175337

(56) Entgegenhaltungen:
- EP-A1- 2 189 771
- DE-A1- 3 733 513
- US-A- 4 020 684
- US-A- 5 834 654

## Beschreibung

Die Erfindung betrifft einen hydrodynamischen Drehmomenterzeuger für Prüfstände, mit zumindest einem Einlassventil und zumindest einem Auslassventil, sowie mit zumindest einer mit diesen Ventilen gekoppelten Regeleinrichtung für die Ventilstellung, sowie ein Regelungsverfahren für hydrodynamische Drehmomenterzeuger, insbesondere an dynamischen Prüfständen.

Dynamische Prüfstände werden verwendet, um beispielsweise einen Verbrennungsmotor wie in einem Personen- oder Nutzkraftwagen zu belasten (US 58 34 654). Im Gegensatz zu Messungen in einem realen Fahrzeug können an einem dynamischen Prüfstand reproduzierbare Bedingungen hinsichtlich Belastung des untersuchten Prüflings, der Temperaturen, der Drücke, etc. garantiert werden und die Zeit sowie die Kosten für die Parametrierung, Tests sowie gesetzlich vorgeschriebene Messungen reduziert werden. Die an derartigen Prüfständen zum Einsatz kommenden Drehmomenterzeuger sind nicht auf einen bestimmten Typ beschränkt, sondern neben elektrischen Maschinen können beispielsweise auch hydrodynamischen Maschinen mit variablem Füllstand zum Einsatz kommen.

Häufig sind dynamische Prüfstände für Verbrennungsmotoren kleinerer und mittlerer Leistung (PKW-, LKW-Motoren, etc.) mit einer elektrische Maschine ausgestattet, die über eine Prüfwelle mit dem zu untersuchenden Motor verbunden ist. Im Gegensatz dazu werden derzeit stationäre Messungen an Verbrennungsmotoren mittlerer und höherer Leistung häufig an Prüfständen mit hydrodynamischen Maschinen durchgeführt, die typischerweise eine geringere Dynamik und Probleme bei der Regelung aufweisen als Elektromaschinen, jedoch eine sehr wirtschaftliche Alternative darstellen.

Es war daher die Aufgabe der vorliegenden Erfindung eine Konstruktion für einen hydrodynamischen Drehmomenterzeuger sowie ein Regelungsverfahren dafür anzugeben, um eine derartige Maschine auch an dynamischen Prüfständen einsetzen zu können.

Zur Lösung dieser Aufgabe ist erfindungsgemäß vorgesehen, dass in der Regeleinrichtung eine Regelung implementiert ist, die sich aus einer Vorsteuerung und einem Feedback-Regler zusammensetzt. Mit einer derartigen Ausgestaltung ist es möglich, hydrodynamische Maschinen mit ihrer sehr geringen mechanischen Trägheit auch für dynamische Messungen anzuwenden.

Gemäß einer ersten vorteilhaften Ausführungsform ist der Drehmomenterzeuger weiters dadurch gekennzeichnet, dass in der Regeleinrichtung eine Vorsteuerung implementiert ist, die auf einer Inversion des statischen, nichtlinearen Kennfeldes des Drehmomenterzeugers basiert.

Eine weitere Ausführungsform ist erfindungsgemäß dadurch gekennzeichnet, dass zumindest ein Einlassventil und zumindest ein Auslassventil gemeinsam mit der Regeleinrichtung gekoppelt sind. Der Feedback-Zweig besteht hier also aus einem einzigen und sehr einfachen Regler, der im einfachsten Fall in der selben Art und Weise auf Einlass- und Auslassventil einwirkt.

Das Regelungsverfahren ist zur Lösung der Aufgabe erfindungsgemäß dadurch gekennzeichnet, dass die Änderung des Füllstands des Drehmomenterzeugers über eine Vorsteuerung und einen Feedback-Regler erfolgt, welche die Stellung zumindest eines der Ventile des Drehmomenterzeugers bestimmen.

Eine bevorzugte Ausführungsvariante sieht dabei vor, dass über die Vorsteuerung und den Feedback-Regler die Stellung zumindest eines Auslassventils und gleichzeitig zumindest eines Einlassventils bestimmt wird.

Vorzugsweise basiert die Vorsteuerung auf einer Inversion des statischen, nichtlinearen Kennfeldes des Drehmomenterzeugers.

Eine vorteilhafte Ausführungsform des erfindungsgemäßen Verfahrens ist weiters dadurch gekennzeichnet, dass aus dem angeforderten Drehmoment in der Vorsteuerung unter Verwendung einer zusätzlichen Bedingung die Positionen von Einlass- und Auslassventil berechnet werden.

Als zusätzliche Bedingung wird gemäß einer weiteren Ausführungsform die Einhaltung von Grenzwerten für die Temperatur des Fluids des Drehmomenterzeugers sichergestellt.

Besonders vorteilhaft gestaltet sich das erfindungsgemäße Verfahren in einer Variante, bei welcher der Arbeitspunkt des Drehmomenterzeugers einem vorgebbaren Referenzwert, gegebenenfalls zeitlich versetzt, nachgeführt wird.

In der nachfolgenden Beschreibung soll die Erfindung anhand bevorzugter Beispiele und unter Bezugnahme auf die Zeichnungen näher erläutert werden.

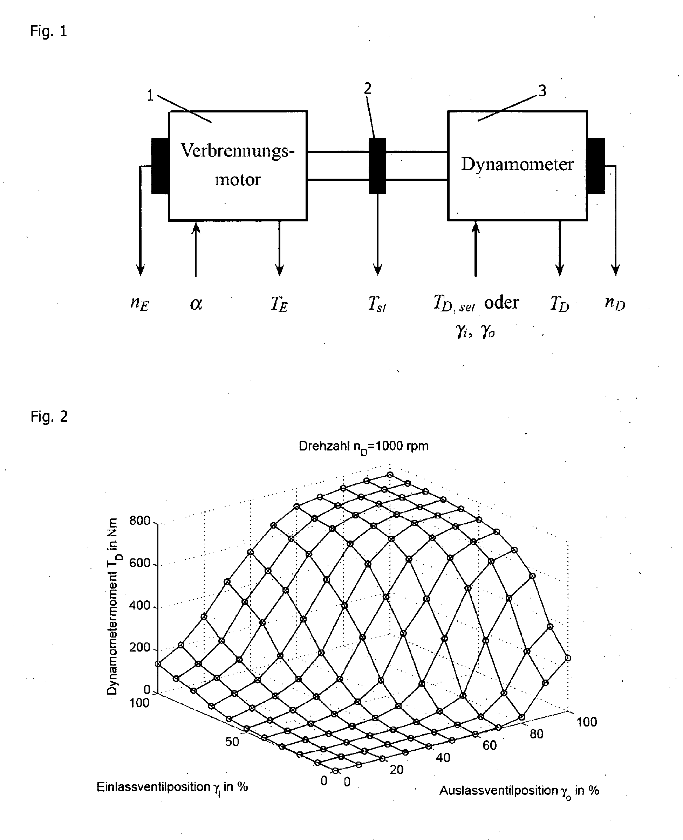

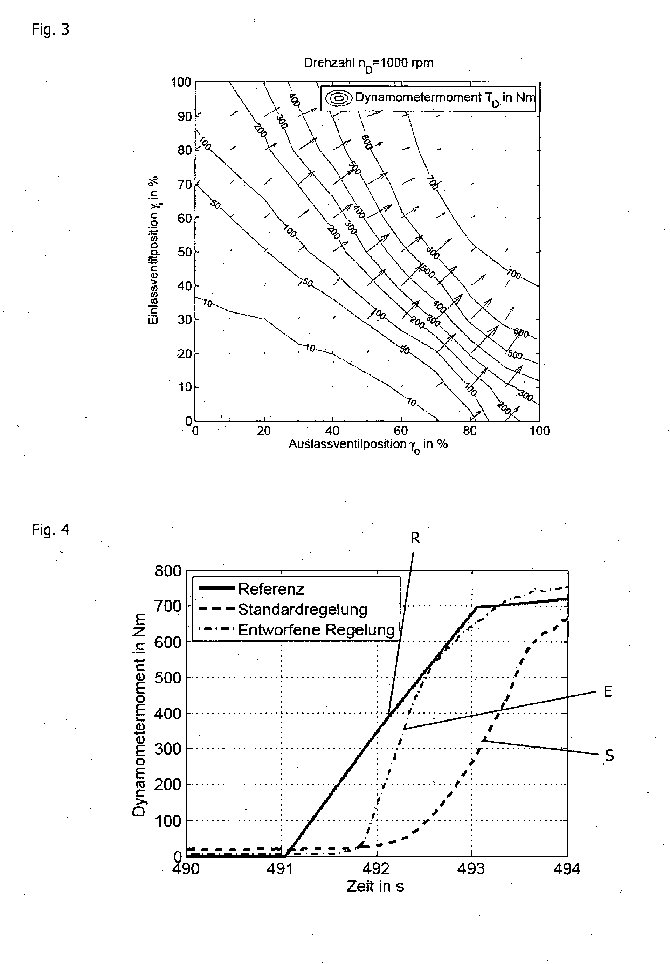

Dabei zeigt die Fig. 1 schematisch einen dynamischen Prüfstand für Verbrennungsmotoren mit einem dynamischem Drehmomenterzeuger, die Fig. 2 ist ein Diagramm des von einem hydrodynamischen Drehmomenterzeuger bereitgestellten Drehmoments als Funktion der Ventilstellungen für eine Drehzahl n = 1000 min-1, Fig. 3 zeigt die Kontourlinien zu Fig. 2, und Fig. 4 ist ein Diagramm zur Darstellung des verzögerten Aufbaus des Drehmoments bei großteils entleertem Drehmomenterzeuger.

Auf einem schematisch in Fig. 1 dargestellten dynamischen Prüfstand ist als Prüfling 1 ein Verbrennungsmotor über eine Prüfwelle 2 mit einer Belastungsmaschine 3 verbunden, die auf den Prüfling ein Drehmoment ausübt. Diese Belastungsmaschine ist erfindungsgemäß eine hydrodynamischen Maschinen, deren Füllstand bzw. Füllstandsänderung zur Veränderung des erzeugten Drehmoments entweder über zumindest ein Auslassventil alleine oder über zumindest ein Einlassventil und zumindest ein Auslassventil gemeinsam gesteuert wird. Bislang sehen die verwendeten Ansätze zur Regelung von hydrodynamischen Maschinen mit Einlass- und Auslassventil(en) die Regelung des Drehmoments hauptsächlich über das Auslassventil vor, während die Temperatur am Auslass bzw. die Temperaturdifferenz zwischen Einlass und Auslass hauptsächlich über das Einlassventil und damit den Fluss durch die Maschine beeinflusst wird. Die Temperatur am Auslass bzw. die Temperaturdifferenz stellt an sich keine zu regelnde Größe dar, es muss nur sichergestellt werden, dass gegebene Grenzwerte eingehalten werden. Diese bekannten Lösungen beschränken jedoch die Änderung des Füllstandes, wobei speziell eine Erhöhung des Drehmoments teilweise erheblichen Verzögerungen unterworfen ist.

Erfindungsgemäß ist nun in der Regeleinrichtung der hydrodynamischen Maschine eine Regelung implementiert, die sich aus einer Vorsteuerung und einem Feedback-Regler zusammensetzt. Die Vorsteuerung basiert auf einer Inversion des statischen, nichtlinearen Kennfeldes (siehe Fig. 2) des Drehmomenterzeugers, das den Zusammenhang zwischen den Ventilstellungen, der Drehzahl und dem resultierenden Drehmoment beschreibt. Das Kennfeld muss für eine hydrodynamische Maschine lediglich einmal aufgenommen werden. Eine Reduktion der Messungen, die zur Erstellung des statischen, nichtlinearen Kennfeldes notwendig sind, kann durch den Einsatz von "Design of Experiments (DOE)" erreicht werden.

Aus dem angeforderten Drehmoment werden in der Vorsteuerung unter Verwendung einer zusätzlichen Bedingung die Positionen von Einlass- und Auslassventil berechnet. Diese ist notwendig, da ein und das selbe Drehmoment mit einer Vielzahl von Ventilstellung erreicht werden kann. Werden, wie dies gemäß der Erfindung vorzugsweise vorgesehen ist, das Einlass- als auch das Auslassventil gleichzeitig verwendet, um sowohl das Drehmoment zu regeln als auch die Einhaltung der Temperaturgrenzen zu garantieren, so kann eine Änderung des Drehmoments schneller vorgenommen werden. Soll beispielsweise der Füllstand der hydrodynamischen Maschine und damit das Drehmoment vergrößert werden, so wird dies am schnellsten durch ein vollständiges Schließen des Auslassventils und vollständiges Öffnen des Einlassventils erreicht.

Motiviert ist die Verwendung eines Reglers für sowohl den Ein- als auch den Auslass durch die Neigung der Linien mit gleichem Drehmoment unter 45°. Eine Korrektur zufolge von Störungen, Abweichungen zwischen Modell und Strecke, etc. erfolgt also näherungsweise im rechten Winkel zu den Linien mit gleichem Drehmoment. Fig. 3 zeigt das Drehmoment der hydrodynamischen Maschine in Abhängigkeit der beiden Ventilstellungen für eine konstante Drehzahl. Im konkreten Fall werden jene Ventilstellungen, für die das geforderte Drehmoment erreicht wird, mit dem geringsten Abstand zu einem "Designpunkt" berechnet. Dadurch wird ein Betrieb der Bremse in der Mitte des Betriebsbereiches erreicht. Der Gradient des Drehmoments ist in diesem Bereich des Kennfeldes zwar nicht maximal, dieser Bereich stellt allerdings einen guten Kompromiss zwischen der Steigung des Kennfeldes und der Unterdrückung von Störungen dar. Dadurch wird außerdem immer ein gewisser Fluss durch die hydrodynamische Maschine garantiert und die Temperatur am Auslass bzw. die Temperaturdifferenz bleibt innerhalb der gegebenen Grenzen. Durch eine Korrektur des Designpunkts ist es desweiteren möglich, den Fluss durch die hydrodynamische Maschine zu beeinflussen und so die Temperaturgrenzen solange das geforderter Moment bzw. die geforderte Leistung unterhalb der zulässigen Grenzen der Maschine liegen, zu garantieren.

Der Entwurf des Feedback-Reglers zur Kompensationen von Störungen, zum Ausgleich von Abweichungen zwischen Modell und Strecke beruht ebenfalls auf Fig. 3. Gemäß Fig. 2 bzw. Fig. 3 werden die beiden Ventile durch diese Ansteuerung und die Einführung eines "Designpunktes" möglichst in der Mitte des Betriebsbereiches betrieben. Um die gegebenen Grenzwerte einzuhalten wird diese Ansteuerung zum einen durch eine Verschiebung des "Designpunktes" in Abhängigkeit der Wassertemperatur am Auslass bzw. der Temperaturdifferenz zwischen Einlass und Auslass ergänzt. Zum anderen wird die Ansteuerung der Ventile durch eine Drehmomentenregelschleife erweitert.

Viele Kombinationen von Ventilstellungen für ein gegebenes Drehmoment liegen für eine fixierte Drehzahl auf einer Linie, die unter 45° geneigt ist. Lediglich für Ventilstellungen im Bereich von 0% bzw. 100% trifft dies nicht mehr zu. Diese Bereiche sollten allerdings vermieden werden, da sonst kein sicherer und ökonomischer Betrieb der hydrodynamischen Maschine möglich ist. Ein Betrieb des Dynamometers an der Grenze des Drehmoments bzw. der Leistung verfügt über keinerlei Reserven.

Dadurch ergibt sich die Möglichkeit mit einem einzigen Feedback-Regler Störungen und Abweichungen über beide Ventilstellungen gemeinsam und gleichzeitig auszugleichen. Im stationären Betrieb wird dies durch eine geringfügige Änderung der Ventilpositionen erreicht und somit die hydrodynamische Bremse immer noch nahe der Mitte des Betriebsbereichs betrieben.

Eine Kompensation der beschränkten Dynamik von Drehmomenterzeugern beliebiger Type ist dann durch die Einführung einer Verzögerung sowie eines Filter, dass den Drehmomenterzeuger vorbereitet, möglich. Beispielsweise können Änderung des Drehmoments einer teilweise gefüllten Wasserbremse speziell bei höheren Drehzahlen schnell realisiert werden. Ist die hydrodynamische Maschine großteils entleert, dann kommt es bei der Erhöhung des Füllstandes zu einer Verzögerung. Fig. 4 zeigt dieses Verhalten der Nachführung einer sich ändernden Drehzahlanforderung (R) bei Verwendung einer Standardregelung (S) sowie der erfindungsgemäßen Regelung (E).

Einerseits können die Verläufe der Referenzen von einem Operator händisch vorgegeben werden, andererseits sind diese für Prüfzyklen bereits im Vorhinein bekannt. In beiden Fällen kann der Drehmomenterzeuger auf eine Änderung des Drehmoments vorbereitet werden, indem diese Information dazu verwendet wird, um den Arbeitspunkt des Drehmomenterzeugers zu verändern und dadurch der gegebenen Referenz zwar zeitlich versetzt aber wesentlich genauer folgen zu können. Im Fall einer großteils entleerten Wasserbremse kann bereits vor der eigentlichen Änderung der Referenz des Drehmoments mit einer Änderung des Füllstandes begonnen werden. Dadurch kann eine Kompensation einer Tötzeit erreicht werden. Im Fall einer händischen Vorgabe muss dazu die Referenz verzögert werden, was allerdings keinerlei Einfluss auf den eigentlichen Betrieb des Prüfstandes hat.

## Patentansprüche

1. Hydrodynamischer Drehmomenterzeuger (3) für Prüfstände, mit zumindest einem Einlassventil und zumindest einem Auslassventil, sowie mit zumindest einer mit diesen Ventilen gekoppelten Regeleinrichtung für die Ventilstellung zur Regelung des Drehmoments des hydrodynamischen Drehmomenterzeugers (3), wobei in der Regeleinrichtung eine Regelung implementiert ist, die sich aus einer Vorsteuerung und einem Feedback-Regler zusammensetzt, **dadurch gekennzeichnet, dass** die Vorsteuerung auf einer Inversion eines bekannten statischen, nichtlinearen Kennfeldes des Drehmomenterzeugers, das den Zusammenhang zwischen den Ventilstellungen, der Drehzahl und dem resultierenden Drehmoment beschreibt, basiert.

2. Drehmomenterzeuger nach Anspruch 1, **dadurch gekennzeichnet, dass** zumindest ein Einlassventil und zumindest ein Auslassventil gemeinsam mit der Regeleinrichtung gekoppelt sind.

3. Regelungsverfahren für hydrodynamische Drehmomenterzeuger, mit zumindest einem Einlassventil und zumindest einem Auslassventil, insbesondere an dynamischen Prüfständen, wobei die Änderung des Füllstands des Drehmomenterzeugers über eine Vorsteuerung und einen Feedback-Regler erfolgt, welche die Stellung zumindest eines der Ventile des Drehmomenterzeugers bestimmen, **dadurch gekennzeichnet, dass** die Vorsteuerung auf einer Inversion eines bekannten statischen, nichtlinearen Kennfeldes des Drehmomenterzeugers, das den Zusammenhang zwischen den Ventilstellungen, der Drehzahl und dem resultierenden Drehmoment beschreibt, basiert.

4. Verfahren nach Anspruch 3, **dadurch gekennzeichnet, dass** über den Feedback-Regler, vorzugsweise gemeinsam mit der Vorsteuerung, die Stellung zumindest eines Auslassventils und gleichzeitig zumindest eines Einlassventils bestimmt wird.

5. Verfahren nach einem der Ansprüche 3 oder 4, **dadurch gekennzeichnet, dass** aus dem angeforderten Drehmoment in der Vorsteuerung unter Verwendung einer zusätzlichen Bedingung die Positionen von Einlass- und Auslassventil berechnet werden.

6. Verfahren nach Anspruch 5, **dadurch gekennzeichnet, dass** als zusätzliche Bedingung die Einhaltung von Grenzwerten für die Temperatur des Fluids des Drehmomenterzeugers sichergestellt wird.

7. Verfahren nach einem der Ansprüche 3 bis 6, **dadurch gekennzeichnet, dass** der Arbeitspunkt des Drehmomenterzeugers einem vorgebbaren Referenzwert, gegebenenfalls zeitlich versetzt, nachgeführt wird.

## Claims

1. A hydrodynamic torque generator (3) for test benches having at least one inlet valve and at least one outlet valve, and having at least one control device for valve positioning coupled to these valves to control the torque of the hydrodynamic torque generator (3), wherein a control which consists of an open-loop feed-forward controller and a closed-loop feedback controller is implemented in the control device, **characterized in that** the open-loop feed-forward controller is based on an inversion of a known static, non-linear characteristic map of the torque generator which describes the relationship between the valve positions, the speed and the resulting torque.

2. The torque generator as claimed in claim 1, **characterized in that** at least one inlet valve and at least one outlet valve are jointly coupled to the control device.

3. A control method for hydrodynamic torque generators having at least one inlet valve and at least one outlet valve, in particular on dynamic test benches, wherein the filling level of the torque generator is varied by means of an open-loop feed-forward controller and a closed-loop feedback controller which determine the position of at least one of the valves of the torque generator, **characterized in that** the open-loop feed-forward controller is based on an inversion of a known static, non-linear characteristic map of the torque generator which describes the relationship between the valve positions, the speed and the resulting torque.

4. The method as claimed in claim 3, **characterized in that** the position of at least one outlet valve and, at the same time, at least one inlet valve is determined by means of the closed-loop feedback controller, preferably in conjunction with the open-loop feed-forward controller.

5. The method as claimed in one of claims 3 or 4, **characterized in that** the positions of inlet and outlet valve are calculated from the required torque in the open-loop feed-forward controller using an additional condition.

6. The method as claimed in claim 5, **characterized in that** adherence to limiting values for the temperature of the fluid of the torque generator is ensured as the additional condition.

7. The method as claimed in one of claims 3 to 6, **characterized in that** the working point of the torque generator tracks a specifiable reference value, if necessary offset in time.

## Revendications

1. Générateur de couple de rotation hydrodynamique (3) pour des bancs d'essai, avec au moins une soupape d'admission et au moins une soupape d'échappement, et avec au moins un dispositif de réglage accouplé à ces soupapes, pour régler la position des soupapes afin de régler le couple de rotation du générateur de couple de rotation hydrodynamique (3), dans lequel le dispositif de réglage comporte un élément de réglage composé d'une commande pilote et d'un régulateur de rétroaction, **caractérisé en ce que** la commande pilote est basée sur une inversion d'un diagramme caractéristique statique non-linéaire connu du générateur de couple de rotation hydrodynamique, lequel décrit le rapport entre les positions des soupapes, la vitesse de rotation et le couple de rotation résultant.

2. Générateur de couple de rotation hydrodynamique selon la revendication 1, **caractérisé en ce qu'**au moins une soupape d'admission et au moins une soupape d'échappement sont accouplées ensemble au dispositif de réglage.

3. Procédé de régulation pour des générateurs de couple de rotation hydrodynamiques, avec au moins une soupape d'admission et au moins une soupape d'échappement, en particulier sur des bancs d'essai dynamiques, dans lequel la modification du niveau de remplissage du générateur de couple hydrodynamique est effectuée par le biais d'une commande pilote et d'un régulateur de rétroaction, lesquels déterminent la position de l'une au moins des soupapes du générateur de couple de rotation hydrodynamique, **caractérisé en ce que** la commande pilote est basée sur une inversion d'un diagramme caractéristique statique non-linéaire connu du générateur de couple de rotation hydrodynamique, lequel décrit le rapport entre les positions des soupapes, la vitesse de rotation et le couple de rotation résultant.

4. Procédé selon la revendication 3, **caractérisé en ce que** le régulateur de rétroaction détermine, de préférence conjointement avec la commande pilote, la position d'au moins une soupape d'échappement et simultanément celle d'au moins une soupape d'admission.

5. Procédé selon l'une des revendications 3 ou 4, **caractérisé en ce que** les positions des soupapes d'admission et d'échappement sont calculées à partir du couple de rotation demandé dans la commande pilote, à l'aide d'une condition supplémentaire.

6. Procédé selon la revendication 5, **caractérisé en ce que** la condition supplémentaire est la garantie du respect de valeurs seuil pour la température du fluide du générateur de couple de rotation hydrodynamique est assuré.

7. Procédé selon l'une des revendications 3 à 6, **caractérisé en ce que** le point de fonctionnement du générateur de couple de rotation hydrodynamique est asservi à une valeur de référence prédéfinissable, éventuellement de façon décalée dans le temps.
